# EUROPEAN PATENT SPECIFICATION

(11) **EP 1 706 280 B1**
(45) Date of publication and mention of the grant of the patent: **23.04.2014**
(21) Application number: 05701934.1
(22) Date of filing: 19.01.2005
(51) Int. Cl.: B42D 15/00, B41C 1/02

(54) **DOCUMENT WITH A SECURITY DEVICE, PRINTING PLATE OR CYLINDER FOR APPLYING THE SECURITY DEVICE AND METHOD OF PRODUCING THE PRINTING PLATE OR CYLINDER**
DOKUMENT MIT SICHERHEITSVORRICHTUNG, DRUCKPLATTE ODER -ZYLINDER ZUR AUFTRAGUNG DER SICHERHEITSVORRICHTUNG UND VERFAHREN ZUR HERSTELLUNG VON DRUCKPLATTE ODER -ZYLINDER
DOCUMENT AVEC DISPOSITIF DE SÉCURITÉ, PLAQUE OU CYLINDRE D'IMPRESSION POUR L'APPLICATION DU DISPOSITIF DE SÉCURITÉ ET PROCÉDÉ DE PRODUCTION DE LA PLAQUE OU DU CYLINDRE D'IMPRESSION

(30) Priority: 21.01.2004 GB 0401370
(43) Date of publication of application: 04.10.2006
(73) Proprietor: De La Rue International Limited, Basingstoke, Hampshire RG22 4BS (GB)
(72) Inventor: STONE, David Allen, Basingstoke, Hampshire RG23 8JE (GB); WILLIAMS, Wendy Victoria, Southampton, Hampshire SO16 2NT (GB); BRATCHLEY, Robin, Reading RG5 4TT (GB)
(74) Representative: Skone James, Robert Edmund
(86) International application number: PCT/GB2005/000169
(87) International publication number: WO 2005/070693

(56) References cited:
- WO-A-01/49505
- WO-A-03/057494

## Description

The invention relates to a document of value including a security device, a printing plate or cylinder for forming the security device and a method for forming printing plates and cylinders.

Security devices are used to protect documents and articles of value such as banknotes, credit cards and the like from counterfeiting and fraudulent reproduction. For example, it is well known to provide documents with fine embossed structures such as holograms, Pixelgrams^{®} and Excelgrams^{®}. Such devices are usually applied as foil transfers but may be applied by direct embossing into inks or previously applied foils. Such methods for applying these diffractive devices can be found in WO9853999, WO9818635, WO9965699 and WO9526872.

It is also well known that print structures can be applied by the intaglio printing method with line widths of 10 microns and above.

In addition it is well known to use embossed or debossed structures on both security documents and commercial documents to provide enhanced eye appeal and additional security. Such structures can take the form of coarse embossing such as latent images. These structures have line widths usually in excess of 100µm and typically in the range 10-250µm. Typical examples of these structures can be found in EP433330 and WO9847715.

The concept of combining intaglio structures and diffractive microstructures together in a single area of a document is well known. Such a technique is commonly used in the production of banknotes to prevent tampering and fraudulent alteration of documents. Typically a holographic transfer is applied onto a banknote prior to the intaglio printing process. During intaglio printing a fine line emboss or print is placed partially overlapping the hologram. This produces a feature that is more difficult to counterfeit than a diffractive device or hologram in an isolated area because the counterfeiter has not only to counterfeit the hologram but also the intaglio emboss or print elements. If the hologram is subsequently removed or tampered with, the fine line design is partially removed as well.

WO02/2027 describes a blind embossing having at least two different relief heights adjoining each other.

WO03/057494 discloses a number of methods for combining a diffractive surface relief element into an intaglio plate. This simplifies the production method but there is still a need to improve security.

US5706106 discloses areas of holographic imagery that are covered by non holographic areas of print. However the design of the print is not related to the design of the hologram. The area of print is simply in register with the total area of the applied holographic foil. The disclosure covers only the use of print with no references to embossed features or intaglio printing technology. Origination methods disclosed for producing the feature in US 5706106 are totally unsuitable for intaglio plate and print preparation. For example it is inappropriate to ink over the holographic area to produce the feature described in this invention.

WO9912748 discloses a method of applying a print coating in register with a holographic design on a sheet of holographic foil. The process is aimed at lying down a resist on top of the foil prior to metallisation which is subsequently removed so that localised areas on the foil can be left unmetallised. The application is not aimed at the production of a security document in which a holographic area is in register with an area of intaglio print outside the area of the hologram.

WO0149505 discloses the provision of two intaglio areas next to each other and in perfect register. The first area has a tactile relief and the second area also has a relief but is not tactile. Again no reference is made to the integration of such designs with a diffractive or holographic element.

In accordance with a first aspect of the present invention, a document of value including a security device comprises a first diffractive structure which generates a first, diffractive image or images in response to incident radiation; and a second, surface relief and/or printed structure, having a coarser resolution than the first diffractive structure, the second structure generating or presenting a second, non-diffractive image visible in response to incident radiation, wherein the first and second images complement one another and are located relative to one another so as to define a composite representation.

We have realised that a novel security feature can be produced by providing one or more diffractive images relative to a non-diffractive image of coarser resolution in such a way that they complement one another and define a composite representation. Typically, at least the diffractive structures will be formed in a metallic foil or printed (litho, gravure etc.) ink surface. The surface that the structures are formed in is chosen such that the three dimensional microstructure can be adequately created to provide the required visual effect.

Although the invention is most conveniently achieved by providing both images in the same imaging process, for example by using a common printing plate or cylinder, this is not essential since precise registration between the images is not always necessary. Rather, it is the manner in which the images complement one another which is important. However precise register will add to the security of the image. A single pass process for precise register is preferred as precise register is harder to mimic or simulate by a counterfeiting process.

The first and second structures are preferably provided in or on a foil or ink on a substrate. The position of the (transfer) foil, or ink into which the diffractive structure is embossed should be underneath the diffractive structure but could also be included anywhere else within the rest of the image or substrate. This may or may not include areas of the coarse (intaglio) structure. For example, the transfer foil or embossable ink could be positioned underneath the diffractive area, with its shape being similar and slightly larger than the diffractive image. Alternatively, it could be positioned underneath the diffractive structure and part of the coarse (intaglio) structure - with its shape being completely independent to the shapes of the diffractive or coarse structures. Another option could be to provide the transfer foil or embossable ink under the whole image (including the diffractive and coarse areas) and its surrounding area.

The diffractive microstructure may produce a coloured image or a black and white image and there could be a set of related images having diffractive or interference effects. At least one of the other components is either a coarse embossed or debossed structure, which does not produce an image by diffractive or light interference effects, but can produce an image by the variation in reflection of the incident light at different or specific angles of view, or an intaglio printed image. The intaglio print may consist of colourless, coloured, white, or optically variable ink. In this invention coarse non-diffractive structures are defined by those having elemental widths of 10µm and above and diffractive structures having elemental widths of less than 10µm but more typically ≤5µm and preferably ≤2µm. The coarse structures are preferably tactile with elemental heights greater than 2µm, preferably greater than 10-15µm. The diffractive structures are preferably non-tactile with elemental heights not more than 1µm.

Such structures are suitable for providing enhanced security on tokens or documents of value such as banknotes, vouchers, stamps, certificates and other high value documents.

The feature is characterised in that the diffractive microstructure produces an image or set of images which combine with the design produced by the non diffractive component to produce a composite complete representation. This representation is not complete unless both the diffractive and non-diffractive components are present. The microstructure may produce more than one image viewable at different angles each one of which integrates with the coarser non diffractive elements of the design. Moreover additional security and design potential is achieved if the image or images produced from the diffractive components of the feature are in good, preferably precise, register with respect to the images produced by the non-diffractive components. Precise registration is defined by no more than ±0.2mm registration of the diffractive structure to the coarse structure from device to device e.g. note to note in the case of banknotes. Good registration is defined by no more than ±1mm registration of the diffractive structure to the coarse structure from device to device. However, depending upon the design and combination of the diffractive and coarse structures, the registration could be also more than ±1mm.

A key point is that it is the image produced by the microstructure rather than the microstructure itself which forms the basis of one key component of this feature.

A key difference between WO0220274 and the invention is that in the invention a diffractive image rather than a physical structure has a design link with coarser intaglio printed areas and/or embossed areas forming an integrated design. The diffractive image may also produce more than one optical image from the same physical structure. Each one of these diffractive images will relate to and form an integrated structure with the intaglio structure.

In this specification, "diffractive structures" include diffraction gratings, dot matrix structures, and classical 2D and 3D holograms, Kinegrams, etc.

The invention covers designs in which un-inked embossed areas of the second structure encroach into the area of the first diffractive structure as well as composite designs where an intaglio printed and inked area encroaches into the first diffractive structure. However when the composite image is produced in a single pass on a standard intaglio press, it would be wise to ensure that the intaglio print areas do not encroach closer than 2 to 3mm of the first, diffractive area otherwise the intaglio wiping action could smear ink into the diffractive area.

The provision of a fully integrated design will lead to the greater visual appeal of the document: it will also enable the man in the street to more easily establish via the first diffractive structure such as a holographic image that a document is genuine. Currently while diffractive microstructures may be thematically related to the design of the document they do not provide an essential part of the design. Frequently counterfeits carry holographic images which are completely different from the design on the genuine document. In a security design created according to the present invention it will be quite clear if the diffractive design does not link in with the rest of the image and thus identification of a counterfeit document will therefore be facilitated.

In addition, preferred embodiments in which the documents have good register between the diffractive and the non-diffractive elements allow greater potential for design integration as well as allowing counterfeits to be clearly identified. Counterfeits are frequently identified by picking up poor register between the different printed elements of a note. Generally it is found that in counterfeits the register of applied foil diffractive structures will not be well controlled; hence comparison with a genuine document according to this invention will allow detection of the counterfeit. Moreover by ensuring the design is such that variation in register will clearly show up in the counterfeit, the variation in register will be clearly apparent to the observer without recourse to measurement. Additionally, by integrating coarser blind embossed or printed designs closely in register or interleaved with a holographic design yet more security can be introduced.

While the optical effects are produced by an embossed microstructure it is possible that the structures may be overlaid by a varnish or other clear coating or plastic layer so the embossing may not be mechanically detected on the surface of the document.

While the substrate on/in which the security device is provided will normally be paper, it could be other conventional security substrates including plastic.

As explained above, the first and second structures could be provided by separate operations on a substrate since it is not always necessary to achieve precise register. However, precise register provides an additional check on the validity of the security device. Thus, in accordance with a second aspect of the present invention, a printing plate or cylinder comprises a first diffractive structure which, after application to a substrate, generates a first, diffractive image or images in response to incident radiation; and a second, surface relief structure, having a coarser resolution than the first diffractive structure, the second structure, when applied to the substrate, generating a second, non-diffractive image visible in response to incident radiation, wherein the first and second images complement one another and are located relative to one another so as to define a composite representation.

With this aspect of the invention, the two structures can be provided on a substrate in a single printing pass leading to precise register and a decrease in manufacturing time.

In accordance with a third aspect of the present invention, a method of producing a printing plate or cylinder comprises forming in a plate or cylinder substrate a first diffractive structure which, after application by the plate or cylinder to a surface, generates a first, diffractive image or images in response to incident radiation; and forming in the plate or cylinder substrate a second, surface relief structure, having a coarser resolution than the first diffractive structure, the second structure, when applied by the plate or cylinder to a surface, generating a second, non-diffractive image visible in response to incident radiation, wherein the first and second images complement one another and are located relative to one another so as to define a composite representation.

These two forming steps can be carried out in either order.

The method may be implemented in a variety of ways of which there are two particularly preferred routes which will be discussed in more,detail below.

The security device could be provided directly on to a security document or article substrate or alternatively it could be provided as a transferable label on a carrier with typically a pressure or heat sensitive adhesive to enable it to be easily transferred onto a document or article, in a conventional manner.

Some examples of security devices and methods for manufacturing printing plates for applying such devices will now be described with reference to the accompanying drawings, in which:-
Figures 1-12 illustrate different examples of security devices made according to the invention; and,
Figure 13 illustrates schematically different stages in two different methods for manufacturing printing plates for applying security devices.

In these examples, each security device is provided on a paper substrate of a security document such as a banknote (not shown), carrying a metal foil or ink, at least in the area to be provided with the diffractive structure, using a single printing plate which carries a first, surface relief microstructure defining a holographic image and a second, intaglio structure defining an intaglio print/embossed structure. The second structure could be blind embossed into the substrate or printed with a suitable intaglio ink. In each example, either good registration (typically ±1mm) is acceptable between the structures (so that they could be provided using differnt processes/plates) or precise registration is necessary, typically to ±0.2mm, preferably ± 50µm. The following examples commence with those for which "good" registration is acceptable followed by those requiring "precise" registration and hence need to be produced from a single intaglio plate.

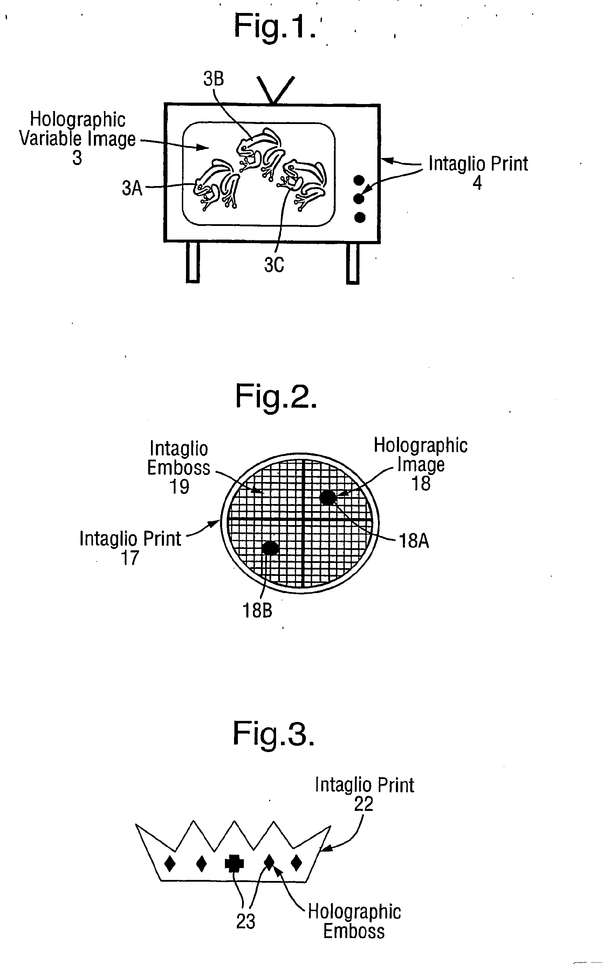

**Television Screen (****Figure 1****):** The (first) holographic screen 3 contains an angle variable, diffractive image (three frogs 3A-3C jumping) - this lies to a good level of registration within a (second) coarse intaglio design of a TV set 4. Both coarse and holographic elements are incorporated within the one design. There are two options as to how the three frogs may vary optically.
1) Each frog displays a colour shift and all are visible over a range of viewing angles.
2) Each frog switches on/off with varying viewing angle. i.e. viewed centrally frog 3B is switched on. Tilt left and frog 3A switches on while frogs 3B, 3C switch off. Tilt right and frog 3C switches on while frogs 3A, 3B switch off.

**Radar Screen (****Figure 2****):** A radar screen is printed by intaglio 17 with its grid lines coarsely embossed 19 into a foil or printed area on the substrate. The radar signal is given as a holographic image 18 (this is a variable holographic image showing how the radar signal is moving 18A,18B) which has been blind embossed into the foil or printed area on the substrate. This integrates both coarse and fine elements in one design. To achieve the correct positioning of the radar signals, the hologram must be in good register with the intaglio embossing.

**Crown (****Figure 3****):** A crown is printed and/or embossed 22 coarsely via the intaglio process. The detail on the crown (jewels etc) is then highlighted using holographic images 23. The entire design is an example of how a diffractive structure and coarse structure may be designed as a composite to complement each other. The position of the highlights must be carefully selected to take full advantage of good register between coarse and fine structures.

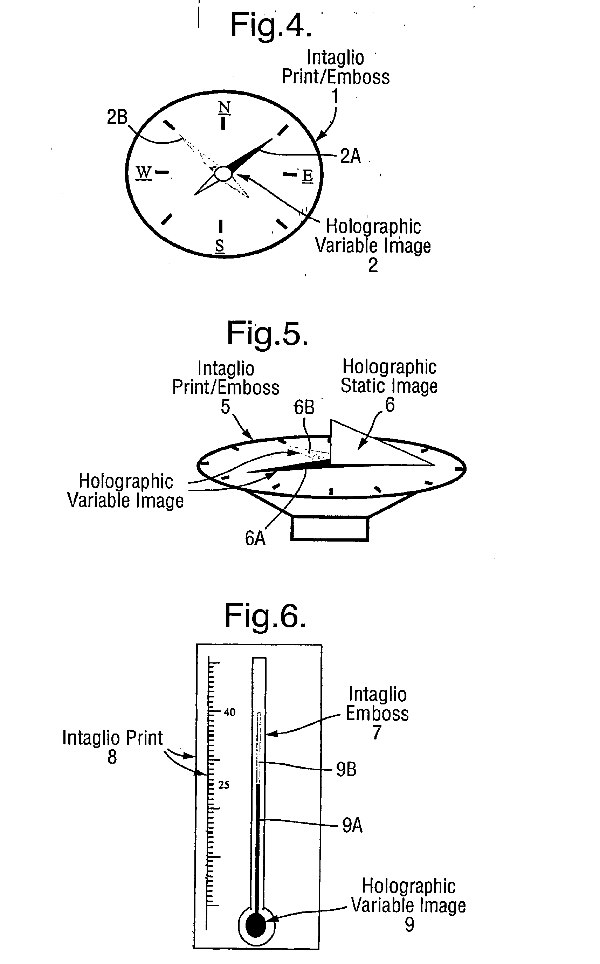

**Compass (****Figure 4****):** The shape and points of a compass are printed or embossed coarsely by intaglio 1. A holographic image 2 in the centre depicts a variable compass needle, which moves to two defined positions 2A,2B at different viewing angles (i.e. NE to NW). The total compass design incorporates both coarse (intaglio) and fine (holographic) elements and requires precise registration. Therefore it will be produced from a single intaglio plate which may be partially inked to produce the coarse image 1.

**Sun Dial (****Figure 5****):** The face of the sundial is printed or embossed coarsely via intaglio 5. The gnomon and its shadow are incorporated as a holographic image 6 - the shadow may be a variable image as shown at 6A, 6B. Both coarse and fine elements are included in the one design. With precise register between the coarse and fine elements 5,6, the holographic shadow will always point in the same defined positions, with the position seen being dependent on angle of view. The image of the gnomon will only be seen in one position. Upon varying viewing angle 6A or 6B switch on/off. Additional points could be included.

**Thermometer (****Figure 6****):** Intaglio is used (either print or emboss) in the design of the thermometer glass 7 and scale 8. The holographic element 9 is the mercury level in the thermometer. Both intaglio and holographic elements are combined in one design and by achieving precise register between the coarse and fine areas the temperature e.g. 25C is always indicated. In addition if the hologram is a variable image, there could be a switch between two exact temperatures e.g. 25C and 40C (9A,9B).

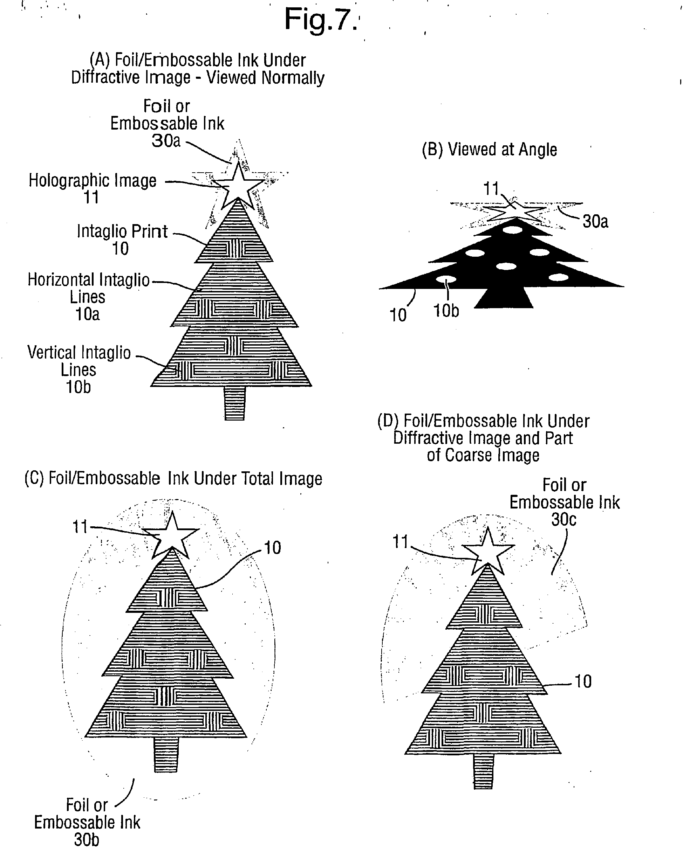

**Star (****Figure 7****):** In Figure 7A, a Christmas tree with baubles is printed by intaglio, comprising horizontal line structures 10a within the tree area and vertical line structures 10b within the bauble. The intaglio line structures 10a, 10b are such that when viewed at an angle, the baubles are observed as a latent image - as shown in Figure 7B. A holographic image of a star 11 is positioned directly on top of the tree 10 - combining both holographic and coarse elements (including a latent image) in one design. This design would require the precise location of the star tip to the intaglio tree to be effective. The star 11 could show a colour shift or generic diffraction effect. However, it is essential to note that the star 11 defines the holographic image, it is not the outline of a transfer foil, or ink into which the diffractive image is embossed. The transfer foil, or ink, into which the diffractive image is embossed should be positioned underneath the diffractive image but could also be anywhere else within the rest of the image or substrate. This may or may not include areas of the coarse intaglio area. For example, in Figure 7A, the foil 30a is positioned close to the diffractive star image as a larger star shape. However, in Figure 7C, the foil 30b is positioned more generally as an oval to incorporate both the diffractive image and the coarse intaglio image. Finally, in Figure 7D, the foil 30c is positioned in a way that it encompasses the holographic star and part of the coarse intaglio design.

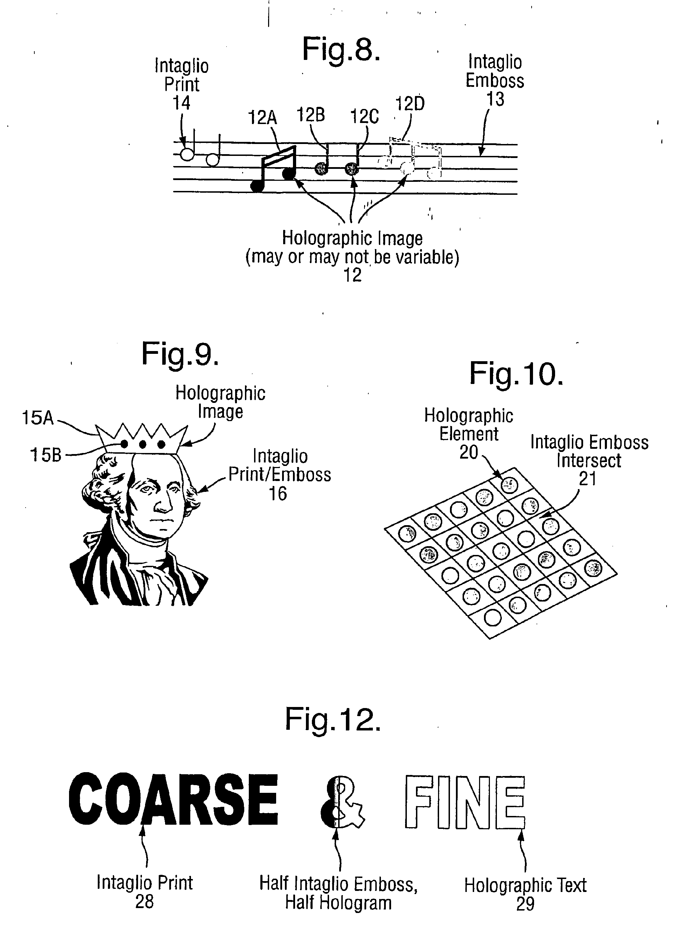

**Musical Notation (****Figure 8****):** Holographic musical notes 12A-12D (which may or may not be variable) are incorporated onto coarse embossed (or printed) manuscript lines 13. This design also includes intaglio printed musical notes 14 - adding further integration between the two elements. With precise registration between intaglio and hologram, the musical notes will always be positioned correctly. In a similar manner to Figure 1 the holographic notes could all replay simultaneously showing a colour shift or replay selectively at changing viewing angle. In this instance a group of notes may replay at a first angle (12A and 12C) and a second group replay at a second viewing angle (12B and 12D).

**Monarch (****Figure 9****):** A holographic image defining a crown 15A and jewels 15B is precisely registered above a monarchs' head, which is printed in intaglio 16. Again, this allows good integration between intaglio and the holographic element. The crown 15A and jewels 15B are holographic. The crown 15A may have a first colour which replays over a wide range of viewing angles whereas the jewels 15B could be different colours and additionally show colour variation with changing viewing angle.

**Pattern (****Figure 10****):** A multi-facet or multi redundant holographic design includes individual components 20 that are precisely intersected by an intaglio dimensioned embossed pattern 21. The overall design of such a pattern would integrate holographic and coarse elements with precise register between the two. The different elements (20) could switch on/off at different viewing angles. It is likely to be designed such that groups of elements will switch on/off rather than each element at its own unique viewing angle.

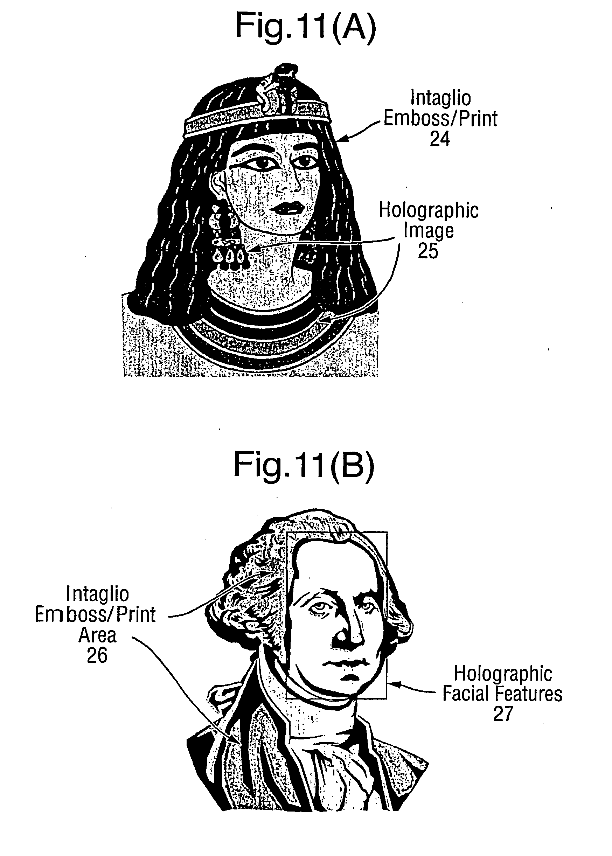

**Portrait (****Figure 11****):** Coarse intaglio print or embossing 24 (Figure 11A) is used to portray a facial portrait. Holographic "accessories" 25 adorn the face e.g. earrings, necklace etc. Alternatively (Figure 11B) the outline of a portrait may be designed in intaglio print or emboss 26, with the inner facial features as a holographic element 27. The finished portrait design incorporates coarse intaglio and fine holographic parts. This requires precise registration for the composite design to "work" effectively.

**Text (****Figure 12****):** A first portion of text is printed in coarse intaglio 28, and a second portion is formed as a diffractive microstructure 29. This would combine both fine holographic and coarse intaglio print elements within one simple text message. In addition, a letter within the text could be combined - half intaglio emboss and half hologram 30. Precise register is required for this example and the holographic text could show a colour variation with changing viewing angle.

We will now describe some novel methods for manufacturing printing plates to enable designs such as those shown in Figures 1 to 12 to be printed and/or embossed on a substrate.

In this description, it should be noted that the invention is not limited to the methods disclosed and other methods could be utilised e.g. using two passes, using laser engraving etc.

Currently, due to limitations and fundamental differences in the origination of coarse structures and diffractive structures an embossing tool containing both diffractive and coarse engravings has not been produced. The inventors have developed methods to manufacture embossing tools capable of producing such hybrid structures. Prior to discussing each of these techniques it is essential to appreciate the methods currently used for originating both coarse structures and diffractive structures. Typically, coarse structures are defined by those having elemental widths ≥10µm and diffractive structures having elemental widths of less than 10µm but more typically ≤2µm.

Coarse structures are generally produced using either a photopolymer route or by direct etching either by hand or by machine. Such machine etching techniques are described in EP-A-906193.

To introduce relatively coarse structures into an intaglio printing plate via the photopolymer route, a design is first generated and outputted onto photographic film. The photographic film is then contacted onto a photopolymer and exposed to broad band UV light for a period of time. The photographic film acts as a mask only allowing the UV light to impinge on the photopolymer in given areas. Where the photopolymer is exposed to UV light it is hardened, regions that are not exposed do not become hardened. The photopolymer is then washed out to remove the non-hardened areas. The photopolymer is then reexposed to UV to harden the remaining photopolymer. In theory this could be used as a printing plate but in reality it lacks durability for most applications. It is more usual to coat the photopolymer with a conductive layer and grow a nickel alto from it. Nickel plates are grown from the alto. The nickel can then optionally be chromed to provide a hardened surface

There exist today two fundamentally different approaches to originating an embossable high security diffractive optically variable element. One approach is to directly write the diffractive microstructure groove by groove, by exposing a suitable material, such as polymethylmethacrylate (PMMA), to a highly focused electron beam. Such structures created using this technique are commercially known as Pixelgrams^{®} and Excel grams^{®}.

The other approach is to use coherent optical radiation (a laser at wavelengths below 500nm) and to create the surface relief microstructure within the medium of photoresist using the phenomenon of two-beam interference. There are various methods for generating these interference patterns in photoresist, which henceforth we shall collectively group under the phrase "photoresist holography".

The most familiar forms of devices formed in this way are the classical 3D and 2D/3D Benton rainbow holograms. However, conventional dot-matrix images and their more sophisticated derivatives produced using an SLM (spatial light modulator) based micro-imaging system also fall into this category, as do devices originated using sophisticated masking technologies. Now because photoresist is only sensitive to electromagnetic radiation in the UV or the blue end of the visible spectrum (i.e. wavelengths less than 500nm) there are currently only a limited number of laser lines available to the practitioner working in the field of embossed homography. Specifically these are the Argon-ion laser's 458mm line (and less suitably its 488nm line), the Helium-Cadmium laser's 441nm line and the Krypton-ion laser's 412nm line (indeed these three lasers are classified and marketed within the laser industry simply as "embossing lasers"). The photoresist containing the diffractive device is then used to form nickel embossing shims, which can be used for the mass production of embossed holograms.

The photopolymers used for intaglio platemaking have been developed to accept a coarse image, with a minimum resolution of about 10 µm. It also has a thick layer of photopolymer which allows the washed-out image to be up to 100µm deep or more. The polymers are available in the large sizes required for platemaking (^{∼}1m²). They are optimised for standard platemaking equipment. The photoresists developed for making diffractive structures are very different. Firstly they are designed for making fine structures which are small in size, and so they are available as thin coatings of less than 2µm on small glass plates, or are available to apply as a thin coating onto a substrate. Secondly they are optimised for imaging as outlined above, on equipment that is not designed to handle 1m² plates. These are specialist and precision materials which is reflected in their cost. It is therefore neither practical nor economic to make both the coarse and diffractive image structures directly in the same photopolymer by the methods outlined above.

### Methods of Creating an Intaglio Plate Combining Intaglio and Diffractive Microstructures

Our preferred approach is to use a combination of photopolymer imaging and thermoplastic moulding techniques. Two such routes are outlined below.

### Production of Intaglio Printing Plate

### Step 1

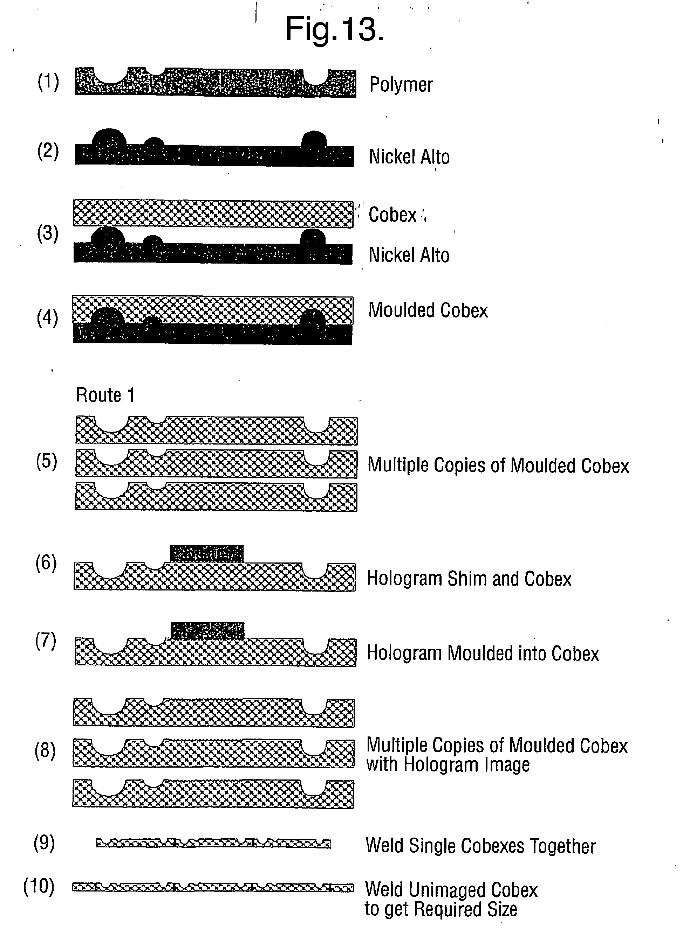

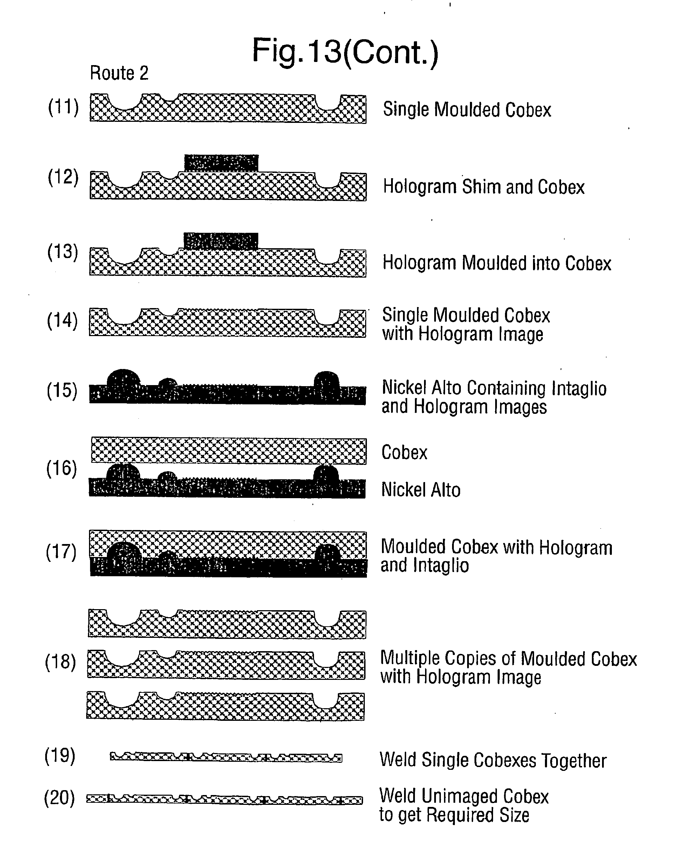

### Step 1 is illustrated in Figure 13 (1 to 4)

Line work for an intaglio design of a single banknote is produced in film work. The areas which represent the intaglio engraved areas are in black. This is then used to produce an intaglio photopolymer plate by placing the film-work in contact with an unexposed polymer plate and exposing to light for an established period of time. Areas exposed to the light are hardened to make them unaffected by the developing solution. After exposure the polymer plate is washed with solvent - this may be aqueous or solvent based (e.g. isopropanol) - and as a result the unexposed areas are washed out producing a polymeric intaglio plate. (Figure 13 (1))

The polymer plate is then silvered by means of a standard silver spray solution, washed and used to electroform a single nickel alto. The nickel alto is trimmed and the back ground to produce a single alto of uniform thickness in the non-image areas. (Figure 13(2))

The nickel alto is placed in a moulding press with the imaged side in contact with a piece of thermoplastic e.g. Cobex (PVC) or polycarbonate sheet. (Figure 13(3)) The combination is then put under pressure at a raised temperature to produce a piece of thermoplastic moulded with an intaglio image. (Figure 13(4))

From this point, two alternative approaches are described to produce the printing plate. After reading the routes described below it will be clear to those skilled in the art of intaglio plate making that other approaches may be adopted.

### Step 2: Route 1

### Step 2 Route 1 is illustrated in Figure 13 (5 to 10)

The moulding process is repeated to produce a sufficient number of single intaglios (or moulded cobexes) required to produce the intaglio printing plate (Figure 13(5). This typically can be between 20 and 50. To produce a plate four notes wide by six notes deep 24 such mouldings will be required. These are then cut to size so that the size represents the eventual size of the printed note.

Holographic images are then impressed into the intaglio mouldings (Figures 13(6) and 13(7). This can be achieved by taking a nickel shim which has the diffractive structure in its surface, and applying it to the thermoplastic material under pressure. Whilst under pressure, the nickel is subjected to a controlled heating and cooling cycle which fixes the structure in the thermoplastic. Each hologram is applied to the plate in near perfect register to the intaglio engraved area by use of equipment that can precisely align the images to the intaglio plate. By suitable selection of imaging conditions it is possible to produce a holographic impression in an area which contains intaglio engraving.

The individual moulds carrying both intaglio and holographic images (Figure 13 (8)) are then moulded together by high frequency welding to produce a replica of the full size printing plate. For a plate consisting of four notes wide by six notes deep, this is typically done by first welding four separate lines of six notes together along their long edges. (Figure 13 (9)) These four lines are then welded together along their long dimension. (Figure 13(10)). Unimaged lengths of PVC are then welded along the edges of the assembly to make it up to the necessary size, and to ensure that the images are in the correct position for subsequent platemaking processes. This is then silver sprayed and attached to a jig for electroforming.

A full-size alto is then electroformed from the above assembly in nickel. This is then separated from the plastic. The plate is then electroformed from the alto. These processes use standard electroforming techniques. After separation from the alto the plate is ground, cut to size, bent and punched for mounting onto an intaglio printing press. The finished structure can be chrome plated if desired, though the chrome may fill in the diffractive structure and degrade the image. The diffractive structure can be left unchromed whilst the remainder of the plate is chromed, using techniques that are available to those skilled in the art.

### Step 2: Route 2

### Step 2 Route 2 is illustrated in Figure 13 (11 to 20).

In this route only one thermoplastic intaglio moulding is produced (Figure 13(11)). A holographic image is then impressed into this intaglio moulding in the precise location required using equipment that can precisely apply holographic images to the intaglio plate. (Figures 13(12),13(13)) By suitable selection of imaging conditions it is possible to produce a holographic impression in an area which contains intaglio engraving. (Figure 13(14))

A single nickel alto (Figure 13(15)) is then grown from the single thermoplastic intaglio after silvering and then using standard electroforming techniques. The nickel alto is trimmed and the back ground to produce a single alto of uniform thickness. The nickel alto is placed in a moulding press with the imaged side in contact with a piece of thermoplastic e.g. Cobex (PVC) or polycarbonate sheet. (Figure 13 (16)) The combination is then put under pressure at a raised temperature to produce a piece of thermoplastic moulded with an intaglio image and a holographic image (Figure 13(17)). The moulding process is repeated to produce a sufficient number of single altos required to produce the intaglio printing plate. (Figure 13(18)). This typically can be between 20 and 50. To produce a plate four notes wide by six notes deep 24 such mouldings will be required. These are then cut to size so that the size represents the eventual size of the printed note.

The mouldings carrying both intaglio and holographic images are then moulded together by high frequency welding to produce a replica of the full size printing plate. For a plate consisting of four notes wide by six notes deep, this is typically done by first welding four separate lines of six notes together along their long edges. (Figure 13(19)) These four lines are then welded together along their long dimension. (Figure (13(20)) Unimaged lengths of PVC are then welded along the edges of the assembly, to make it up to the necessary size, and to ensure that the images are in the correct position for subsequent platemaking processes. This is then silver sprayed and attached to a jig for electroforming.

A full size alto is then electroformed from the above assembly in nickel. This is then separated from the plastic. The plate is then electroformed from the alto. These processes use standard electroforming techniques. After separation from the alto the plate is ground, cut to size, bent, and punched for mounting onto an intaglio printing press. The finished structure can be chrome plated if desired, though the chrome may fill in the diffractive structure and degrade the image. The diffractive structure can be left unchromed whilst the remainder of the plate is chromed, using techniques that are available to those skilled in the art.

### Merits of Route 1 and 2

Route 1: This provides good image quality with good register and good image positioning. Register of intaglio image to hologram image is better than ±1mm. In addition, if there are for example 30 images on a plate, there would be 30 discrete positions of the diffractive structure relative to the intaglio, rather than an infinite number of positions as would be created in a counterfeit operation involving the creation of the intaglio elements and holographic elements in more than one step.

Route 2: This provides good image quality with good register and excellent image positioning. Register of intaglio image to hologram image is better than ± 0.2mm. In addition, as the fit between the intaglio and hologram image is set in the original, the register between the two in each note position is identical. Some reduction of holographic image quality may occur compared with Route 1 but the effect is not severe.

The invention is not restricted to embossing and printing by intaglio. There are alternative methods of production which can be utilised to achieve a similar end result. One possibility is to incorporate both the coarse intaglio-scale and fine holographic scale images into a combined blocking or stamping embossing die.

There are several approaches which could be used to produce a combined embossing tool. One approach is outlined below.

The line work for the coarse intaglio-scale structure can be produced in film work, and this film work used to produce a photopolymer plate as outlined earlier. This photopolymer plate can then be used to electroform a nickel alto, which can subsequently be used to mould into a thermoplastic sheet also as explained previously. This produces a piece of thermoplastic moulded with a coarse intaglio-scale image. A holographic image can then be impressed into the moulding using a combination of temperature and pressure in a controlled cycle as explained previously. This produces a single piece of a thermoplastic which contains the combined coarse and fine scale images. This can then be silver sprayed and used as a mandrel for electroforming using standard electroforming techniques. Typically this would be copper or nickel electroforming. The nickel or copper article could be used as an embossing tool directly. Alternatively it could be replicate by a standard 2-stage, electroforming technique. The first stage would produce, an image in which the original recessed areas were raised, and the second stage would be to use this to produce a final tool with the images recessed as desired. This technique can be used to create many copies from one original moulded polymer.

The nickel or copper article which has the raised images could be used as an embossing tool itself. In this embodiment the coarser scale image will produce a "deboss" in the substrate, so the coarse image will be a recess in the substrate and not raised.

## Claims

1. A document of value including a security device comprising a first diffractive structure which generates a first, diffractive image or images in response to incident radiation; and a second, surface relief and/or printed structure, having a coarser resolution than the first diffractive structure, the second structure generating or presenting a second, non-diffractive image visible in response to incident radiation, **characterized in that** the first and second images complement one another and are located relative to one another so as to define a composite representation.

2. A document of value according to claim 1, wherein the first diffractive structure is a surface relief microstructure.

3. A document of value according to claim 1 or claim 2, wherein the first diffractive structure generates an image or images which varies in colour with changing viewing angle.

4. A document of value according to any of the preceding claims, wherein the first diffractive structure generates different images with changing viewing angle.

5. A document of value according to any of claims 1 to 3, wherein the first diffractive structure generates different orientations of a common image with changing viewing angle.

6. A document of value according to any of the preceding claims, wherein the first, diffractive image is a hologram.

7. A document of value according to any of the preceding claims, wherein the security device is formed on or in a paper substrate.

8. A document of value according to any of the preceding claims, wherein the security device is formed at least partly on or in a metallic foil.

9. A document of value according to any of claims 1 to 7, wherein the security device is formed at least partly on or in an ink.

10. A document of value according to any of the preceding claims, wherein the first and second images are visible in response to incident, visible light.

11. A document of value according to any of the preceding claims, wherein the composite representation simulates a real physical entity or design.

12. A document of value according to any of the preceding claims, wherein the second structure is embossed or debossed in a substrate.

13. A document of value according to any of claims 1 to 11, wherein the second structure is an intaglio print.

14. A document of value according to any of claims 11 to 13, wherein the second structure has minimum elemental dimensions such as line width, spacing and the like of at least 10 microns.

15. A document of value according to claim 14, wherein the second structure is tactile.

16. A document of value according to any of the preceding claims, wherein the first structure has maximum elemental dimensions such as grating frequency, periodicity or width of less than 10 microns.

17. A document of value according to claim 16, wherein the first structure has maximum elemental dimensions of no more than 5 microns, preferably no more than 2 microns.

18. A document of value according to claim 16 or claim 17, wherein the second structure is non-tactile.

19. A document of value according to any of the preceding claims, wherein the first and second structures are provided in precise register.

20. A document of value according to any of the preceding claims, wherein the device is provided in the form of a transferable label.

21. A document of value according to any of claims 1 to 18, wherein the device is provided directly on/in a document of value.

22. A document of value according to any of the preceding claims, wherein the composite representation comprises one of a compass, display, sun dial, gauge eg thermometer, musical notation, portrait and text.

23. A printing plate or cylinder comprising a first diffractive structure which, after application to a substrate, generates a first, diffractive image or images in response to incident radiation; and a second, surface relief structure, having a coarser resolution than the first diffractive structure, the second structure, when applied to the substrate, generating a second, non-diffractive image visible in response to incident radiation, **characterized in that** the first and second images complement one another and are located relative to one another so as to define a composite representation.

24. A printing plate or cylinder according to claim 23, wherein the first diffractive structure is a surface relief microstructure.

25. A plate or cylinder according to claim 23 or claim 24, wherein the first diffractive structure generates an image or images which varies in colour with changing viewing angle.

26. A plate or cylinder according to any of claims 23 to 25, wherein the first diffractive structure generates different images with changing viewing angle.

27. A plate or cylinder according to any of claims 23 to 25, wherein the first diffractive structure generates different orientations of a common image with changing viewing angle.

28. A plate or cylinder according to any of claims 23 to 27, wherein the first, diffractive image is a hologram.

29. A plate or cylinder according to any of claims 23 to 28, wherein the first and second images are visible in response to incident, visible light.

30. A plate or cylinder according to any of claims 23 to 29, wherein the composite representation simulates a real physical entity or design.

31. A plate or cylinder according to any of claims 23 to 30, wherein the second structure embosses or debosses a substrate in use.

32. A plate or cylinder according to claim 31, wherein the second structure has minimum elemental dimensions such as line width, spacing and the like of at least 10 microns.

33. A plate or cylinder according to any of claims 23 to 32, wherein the first structure has maximum elemental dimensions such as grating frequency, periodicity or width of less than 10 microns.

34. A plate or cylinder according to claim 33, wherein the first structure has maximum elemental dimensions of no more than 5 microns, preferably no more than 2 microns.

35. A method of producing a printing plate or cylinder defining a security device, the method comprising forming in a plate or cylinder substrate a first diffractive structure which, after application by the plate or cylinder to a surface, generates a first, diffractive image or images in response to incident radiation; and forming in the plate or cylinder substrate a second, surface relief structure, having a coarser resolution than the first diffractive structure, the second structure, when applied by the plate or cylinder to a surface, generating a second, non-diffractive image visible in response to incident radiation, **characterized in that** the first and second images complement one another and are located relative to one another so as to define a composite representation.

36. A method according to claim 35, the method including forming a precursor thermoplastic member from which the printing plate or cylinder will be formed, the second, surface relief structure being formed in the precursor thermoplastic member using a photopolymer or direct etch process.

37. A method according to claim 36, further comprising forming a plurality of precursor thermoplastic members, embossing the first diffractive structure into each of the plurality of precursor thermoplastic members, joining the precursor thermoplastic members together, and forming the printing plate or cylinder from the joined thermoplastic members.

38. A method according to claim 36, comprising embossing the thermoplastic member with the first diffractive microstructure, forming a plurality of embossed subsidiary
thermoplastic members from the same precursor, joining the subsidiary thermoplastic members together, and forming the printing plate or cylinder from the joined thermoplastic members.

39. A method according to any of claims 35 to 38, wherein the precursor thermoplastic member also carries a structure defining intaglio print regions.

40. A printing plate or cylinder according to any of claims 23 to 34 or formed by a method according to any of claims 35 to 39, wherein the printing plate or cylinder defines one or more banknotes.

41. A method of manufacturing a document of value according to any of claims 1 to 22, the method comprising (i) providing a substrate carrying a metallic foil or an ink; (ii) embossing the first diffractive structure into the foil or ink; and (iii) providing the second, surface relief and/or printed structure adjacent the first structure.

42. A method according to claim 41, wherein steps (ii) and (iii) are carried out simultaneously.

43. A method according to claim 42, wherein steps (ii) and (iii) are carried out using the same intaglio plate or cylinder.

44. A method according to any of claims 41 to 43, wherein the second structure is blind embossed into the substrate.

45. A method according to any of claims 41 to 43, wherein the second structure is intaglio printed on the substrate.

46. A document of value according to any of claims 1 to 22 or made according to any of claims 41 to 45 comprising one of a banknote, voucher, stamp or certificate, label, passport, ID card, financial card, or driving licence.

## Patentansprüche

1. Wertdokument mit einer Sicherheitsvorrichtung, umfassend eine erste diffraktive Struktur, die ein erstes, diffraktives Bild oder diffraktive Bilder als Reaktion auf einfallende Strahlung erzeugt; und eine zweite, Oberflächenrelief- und/oder gedruckte Struktur mit einer gröberen Auflösung als die erste diffraktive Struktur, wobei die zweite Struktur ein zweites, nicht diffraktives, als Reaktion auf einfallende Strahlung sichtbares Bild erzeugt oder darbietet, **dadurch gekennzeichnet, dass** das erste und das zweite Bild einander ergänzen und derart relativ zueinander liegen, das sie eine zusammengesetzte Darstellung definieren.

2. Wertdokument nach Anspruch 1, wobei es sich bei der ersten diffraktiven Struktur um eine Oberflächenrelief-Mikrostruktur handelt.

3. Wertdokument nach Anspruch 1 oder Anspruch 2, wobei die erste diffraktive Struktur ein Bild oder Bilder erzeugt, dessen Farbe sich mit sich änderndem Betrachtungswinkel verändert.

4. Wertdokument nach einem der vorangehenden Ansprüche, wobei die erste diffraktive Struktur mit sich änderndem Betrachtungswinkel verschiedene Bilder erzeugt.

5. Wertdokument nach einem der Ansprüche 1 bis 3, wobei die erste diffraktive Struktur mit sich änderndem Betrachtungswinkel verschiedene Orientierungen eines gemeinsamen Bilds erzeugt.

6. Wertdokument nach einem der vorangehenden Ansprüche, wobei es sich bei dem ersten, diffraktiven Bild um ein Hologramm handelt.

7. Wertdokument nach einem der vorangehenden Ansprüche, wobei die Sicherheitsvorrichtung auf oder in einem Papiersubstrat gebildet ist.

8. Wertdokument nach einem der vorangehenden Ansprüche, wobei die Sicherheitsvorrichtung mindestens teilweise auf oder in einer Metallfolie gebildet ist.

9. Wertdokument nach einem der Ansprüche 1 bis 7, wobei die Sicherheitsvorrichtung mindestens teilweise auf oder in einer Tinte gebildet ist.

10. Wertdokument nach einem der vorangehenden Ansprüche, wobei das erste und das zweite Bild als Reaktion auf einfallendes sichtbares Licht sichtbar sind.

11. Wertdokument nach einem der vorangehenden Ansprüche, wobei die zusammengesetzte Darstellung ein echtes physisches Gebilde oder Design simuliert.

12. Wertdokument nach einem der vorangehenden Ansprüche, wobei die zweite Struktur in einem Substrat hochgeprägt oder eingeprägt ist.

13. Wertdokument nach einem der Ansprüche 1 bis 11, wobei es sich bei der zweiten Struktur um einen Tiefdruck handelt.

14. Wertdokument nach einem der Ansprüche 11 bis 13, wobei die zweite Struktur minimale Elementabmessungen, wie etwa Linienbreite, -abstand und dergleichen von mindestens 10 Mikrometern aufweist.

15. Wertdokument nach Anspruch 14, wobei die zweite Struktur tastbar ist.

16. Wertdokument nach einem der vorangehenden Ansprüche, wobei die erste Struktur maximale Elementabmessungen, wie etwa Gitterauflösung, -periodizität oder -breite von weniger als 10 Mikrometern aufweist.

17. Wertdokument nach Anspruch 16, wobei die erste Struktur maximale Elementabmessungen von nicht mehr als 5 Mikrometern, bevorzugt nicht mehr als 2 Mikrometern aufweist.

18. Wertdokument nach Anspruch 16 oder Anspruch 17, wobei die zweite Struktur nicht tastbar ist.

19. Wertdokument nach einem der vorangehenden Ansprüche, wobei die erste und die zweite Struktur in genauer Deckung vorgesehen sind.

20. Wertdokument nach einem der vorangehenden Ansprüche, wobei die Vorrichtung in Form eines übertragbaren Etiketts vorgesehen ist.

21. Wertdokument nach einem der Ansprüche 1 bis 18, wobei die Vorrichtung direkt auf/in einem Wertdokument vorgesehen ist.

22. Wertdokument nach einem der vorangehenden Ansprüche, wobei die zusammengesetzte Darstellung eines der Folgenden umfasst: einen Kompass, eine Anzeige, eine Sonnenuhr, ein Messinstrument, z. B. Thermometer, einen Notensatz, ein Porträt und Text.

23. Druckplatte oder -zylinder, umfassend eine erste diffraktive Struktur, die nach dem Aufbringen auf ein Substrat ein erstes, diffraktives Bild oder diffraktive Bilder als Reaktion auf einfallende Strahlung erzeugt; und eine zweite, Oberflächenrelief- und/oder gedruckte Struktur mit einer gröberen Auflösung als die erste diffraktive Struktur, wobei die zweite Struktur, wenn sie auf das Substrat aufgebracht ist, ein zweites, nicht diffraktives, als Reaktion auf einfallende Strahlung sichtbares Bild erzeugt oder darbietet, **dadurch gekennzeichnet, dass** das erste und das zweite Bild einander ergänzen und derart relativ zueinander liegen, das sie eine zusammengesetzte Darstellung definieren.

24. Druckplatte oder -zylinder nach Anspruch 23, wobei es sich bei der ersten diffraktiven Struktur um eine Oberflächenrelief-Mikrostruktur handelt.

25. Platte oder Zylinder nach Anspruch 23 oder Anspruch 24, wobei die erste diffraktive Struktur ein Bild oder Bilder erzeugt, dessen Farbe sich mit änderndem Betrachtungswinkel verändert.

26. Platte oder Zylinder nach einem der Ansprüche 23 bis 25, wobei die erste diffraktive Struktur mit sich änderndem Betrachtungswinkel verschiedene Bilder erzeugt.

27. Platte oder Zylinder nach einem der Ansprüche 23 bis 25, wobei die erste diffraktive Struktur mit sich änderndem Betrachtungswinkel verschiedene Orientierungen eines gemeinsamen Bilds erzeugt.

28. Platte oder Zylinder nach einem der Ansprüche 23 bis 27, wobei es sich bei dem ersten, diffraktiven Bild um ein Hologramm handelt.

29. Platte oder Zylinder nach einem der Ansprüche 23 bis 28, wobei das erste und das zweite Bild als Reaktion auf einfallendes sichtbares Licht sichtbar sind.

30. Platte oder Zylinder nach einem der Ansprüche 23 bis 29, wobei die zusammengesetzte Darstellung ein echtes physisches Gebilde oder Design simuliert.

31. Platte oder Zylinder nach einem der Ansprüche 23 bis 30, wobei die zweite Struktur im Einsatz ein Substrat einprägt oder hochprägt.

32. Platte oder Zylinder nach Anspruch 31, wobei die zweite Struktur minimale Elementabmessungen, wie etwa Linienbreite, -abstand und dergleichen von mindestens 10 Mikrometern aufweist.

33. Platte oder Zylinder nach einem der Ansprüche 23 bis 32, wobei die erste Struktur maximale Elementabmessungen, wie etwa Gitterauflösung, -periodizität oder -breite von weniger als 10 Mikrometern aufweist.

34. Platte oder Zylinder nach Anspruch 33, wobei die erste Struktur maximale Elementabmessungen von nicht mehr als 5 Mikrometern, bevorzugt nicht mehr als 2 Mikrometern aufweist.

35. Verfahren zum Herstellen einer Druckplatte oder eines Druckzylinders, die bzw. der eine Sicherheitsvorrichtung definiert, wobei das Verfahren Folgendes umfasst: Bilden einer ersten diffraktiven Struktur in einem Platten- oder Zylindersubstrat, die nach dem Aufbringen durch die Platte bzw. den Zylinder auf eine Oberfläche ein als Reaktion auf einfallende Strahlung ein erstes, diffraktives Bild oder diffraktive Bilder erzeugt; und Bilden einer zweiten, Oberflächenreliefstruktur in dem Platten- oder Zylindersubstrat, die eine gröbere Auflösung aufweist als die erste diffraktive Struktur, wobei die zweite Struktur, wenn sie von der Platte bzw. dem Zylinder auf eine Oberfläche aufgebracht wird, ein zweites, nicht diffraktives, als Reaktion auf einfallende Strahlung sichtbares Bild erzeugt, **dadurch gekennzeichnet, dass** das erste und das zweite Bild einander ergänzen und derart relativ zueinander liegen, dass sie eine zusammengesetzte Darstellung definieren.

36. Verfahren nach Anspruch 35, wobei das Verfahren das Bilden eines thermoplastischen Vorläuferelements umfasst, aus dem die Druckplatte oder der Druckzylinder gebildet werden wird, wobei die zweite, Oberflächenreliefstruktur unter Verwendung eines Photopolymers oder eines direkten Ätzverfahrens in dem thermoplastischen Vorläuferelement gebildet wird.

37. Verfahren nach Anspruch 36, weiter umfassend das Bilden mehrerer thermoplastischer Vorläuferelemente, Prägen der ersten diffraktiven Struktur in jedes der mehreren thermoplastischen Vorläuferelemente, Zusammenfügen der thermoplastischen Vorläuferelemente und Bilden der Druckplatte oder des Druckzylinders aus den zusammengefügten thermoplastischen Elementen.

38. Verfahren nach Anspruch 36, umfassend das Prägen des thermoplastischen Elements mit der ersten diffraktiven Mikrostruktur, das Bilden mehrerer geprägter untergeordneter thermoplastischer Elemente aus dem selben Vorläufer, das Zusammenfügen der untergeordneten thermoplastischen Elemente und das Bilden der Druckplatte oder des Druckzylinders aus den zusammengefügten thermoplastischen Elementen.

39. Verfahren nach einem der Ansprüche 35 bis 38, wobei das thermoplastische Vorläuferelement außerdem eine Tiefdruckregionen definierende Struktur trägt.

40. Druckplatte oder -zylinder nach einem der Ansprüche 23 bis 34 oder mit einem Verfahren nach einem der Ansprüche 35 bis 39 gebildet, wobei die Druckplatte oder der Druckzylinder eine oder mehrere Banknoten definiert.

41. Verfahren zum Herstellen eines Wertdokument nach einem der Ansprüche 1 bis 22, wobei das Verfahren Folgendes umfasst: (i) Bereitstellen eines Substrats, das eine Metallfolie oder eine Tinte trägt; (ii) Prägen der ersten diffraktiven Struktur in die Folie oder Tinte; und (iii) Bereitstellen der zweiten, Oberflächenrelief- und/oder gedruckten Struktur neben der ersten Struktur.

42. Verfahren nach Anspruch 41, wobei die Schritte (ii) und (iii) gleichzeitig ausgeführt werden.

43. Verfahren nach Anspruch 42, wobei die Schritte (ii) und (iii) unter Verwendung der selben Tiefdruckplatte oder des selben Tiefdruckzylinders ausgeführt werden.

44. Verfahren nach einem der Ansprüche 41 bis 43, wobei die zweite Struktur in das Substrat blindgeprägt wird.

45. Verfahren nach einem der Ansprüche 41 bis 43, wobei die zweite Struktur auf das Substrat tiefgedruckt wird.

46. Wertdokument nach einem der Ansprüche 1 bis 22 oder hergestellt nach einem der Ansprüche 41 bis 45, umfassend eines der Folgenden: eine Banknote, einen Gutschein, eine Briefmarke oder Urkunde, ein Etikett, einen Pass, eine ID-Karte, eine Finanzkarte oder einen Führerschein.

## Revendications

1. Document de valeur comprenant un dispositif de sécurité comportant une première structure de diffraction qui produit une (ou des) première(s) image ou images de diffraction en réponse à un rayonnement incident ; et une seconde structure à relief de surface et/ou imprimée, ayant une résolution plus grossière par rapport à la première structure de diffraction, la seconde structure produisant ou présentant une seconde image de non-diffraction visible en réponse à un rayonnement incident, **caractérisé en ce que** les première et seconde images se complètent l'une l'autre et sont situées l'une par rapport à l'autre de manière à définir une représentation composite.

2. Document de valeur selon la revendication 1, dans lequel la première structure de diffraction est une microstructure à relief de surface.

3. Document de valeur selon la revendication 1 ou la revendication 2, dans lequel la première structure de diffraction produit une image ou des images qui varie(nt) en couleur en fonction d'un angle de vue changeant.

4. Document de valeur selon l'une quelconque des revendications précédentes, dans lequel la première structure de diffraction produit différentes images en fonction d'un angle de vue changeant.

5. Document de valeur selon l'une quelconque des revendications 1 à 3, dans lequel la première structure de diffraction produit différentes orientations d'une image commune en fonction d'un angle de vue changeant.

6. Document de valeur selon l'une quelconque des revendications précédentes, dans lequel la première image de diffraction est un hologramme.

7. Document de valeur selon l'une quelconque des revendications précédentes, dans lequel le dispositif de sécurité est formé sur ou dans un substrat de papier.

8. Document de valeur selon l'une quelconque des revendications précédentes, dans lequel le dispositif de sécurité est formé au moins partiellement sur ou dans une feuille métallique.

9. Document de valeur selon l'une quelconque des revendications 1 à 7, dans lequel le dispositif de sécurité est formé au moins partiellement sur ou dans une encre.

10. Document de valeur selon l'une quelconque des revendications précédentes, dans lequel les première et seconde images sont visibles en réponse à une lumière visible incidente.

11. Document de valeur selon l'une quelconque des revendications précédentes, dans lequel la représentation composite simule une conception ou entité physique réelle.

12. Document de valeur selon l'une quelconque des revendications précédentes, dans lequel la seconde structure est marquée en relief ou marquée en creux dans un substrat.

13. Document de valeur selon l'une quelconque des revendications 1 à 11, dans lequel la seconde structure est une impression en creux.

14. Document de valeur selon l'une quelconque des revendications 11 à 13, dans lequel la seconde structure a des dimensions élémentaires minimales comme la largeur de trait, l'espacement et autres d'au moins 10 microns.

15. Document de valeur selon la revendication 14, dans lequel la seconde structure est tactile.

16. Document de valeur selon l'une quelconque des revendications précédentes, dans lequel la première structure a des dimensions élémentaires maximales comme la fréquence de réseau, la périodicité ou la largeur de moins de 10 microns.

17. Document de valeur selon la revendication 16, dans lequel la première structure a des dimensions élémentaires maximales ne faisant pas plus de 5 microns, de préférence pas plus de 2 microns.

18. Document de valeur selon la revendication 16 ou la revendication 17, dans lequel la seconde structure est non tactile.

19. Document de valeur selon l'une quelconque des revendications précédentes, dans lequel les première et seconde structures sont mises en oeuvre selon un repérage précis.

20. Document de valeur selon l'une quelconque des revendications précédentes, dans lequel le dispositif est mis en oeuvre sous la forme d'une étiquette transférable.

21. Document de valeur selon l'une quelconque des revendications 1 à 18, dans lequel le dispositif est mis en oeuvre directement sur/dans un document de valeur.

22. Document de valeur selon l'une quelconque des revendications précédentes, dans lequel la représentation composite comporte l'un parmi un compas, un cadran solaire, un appareil de mesure par exemple un thermomètre, une notation musicale, un portrait et du texte.

23. Plaque ou cylindre d'impression comportant une première structure de diffraction qui, après application sur un substrat, produit une (ou des) première(s) image ou images de diffraction en réponse à un rayonnement incident ; et une seconde structure à relief de surface, ayant une résolution plus grossière par rapport à la première structure de diffraction, la seconde structure, quand elle est appliquée sur le substrat, produisant une seconde image de non-diffraction visible en réponse à un rayonnement incident, **caractérisé en ce que** les première et seconde images se complètent l'une l'autre et sont situées l'une par rapport à l'autre de manière à définir une représentation composite.

24. Plaque ou cylindre d'impression selon la revendication 23, dans laquelle/lequel la première structure de diffraction est une microstructure à relief de surface.

25. Plaque ou cylindre selon la revendication 23 ou la revendication 24, dans laquelle/lequel la première structure de diffraction produit une image ou des images qui varie(nt) en couleur en fonction d'un angle de vue changeant.

26. Plaque ou cylindre selon l'une quelconque des revendications 23 à 25, dans laquelle/lequel la première structure de diffraction produit différentes images en fonction d'un angle de vue changeant.

27. Plaque ou cylindre selon l'une quelconque des revendications 23 à 25, dans laquelle/lequel la première structure de diffraction produit différentes orientations d'une image commune en fonction d'un angle de vue changeant.

28. Plaque ou cylindre selon l'une quelconque des revendications 23 à 27, dans laquelle/lequel la première image de diffraction est un hologramme.

29. Plaque ou cylindre selon l'une quelconque des revendications 23 à 28, dans laquelle/lequel les première et seconde images sont visibles en réponse à une lumière visible incidente.

30. Plaque ou cylindre selon l'une quelconque des revendications 23 à 29, dans laquelle/lequel la représentation composite simule une conception ou entité physique réelle.

31. Plaque ou cylindre selon l'une quelconque des revendications 23 à 30, dans laquelle/lequel la seconde structure effectue un marquage en relief ou un marquage en creux au niveau d'un substrat lors de l'utilisation.

32. Plaque ou cylindre selon la revendication 31, dans laquelle/lequel la seconde structure a des dimensions élémentaires minimales comme la largeur de trait, l'espacement et autres d'au moins 10 microns.

33. Plaque ou cylindre selon l'une quelconque des revendications 23 à 32, dans laquelle/lequel la première structure a des dimensions élémentaires maximales comme la fréquence de réseau, la périodicité ou la largeur de moins de 10 microns.

34. Plaque ou cylindre selon la revendication 33, dans laquelle/lequel la première structure a des dimensions élémentaires maximales ne faisant pas plus de 5 microns, de préférence pas plus de 2 microns.

35. Procédé permettant de produire une plaque ou un cylindre d'impression définissant un dispositif de sécurité, le procédé comportant l'étape consistant à former dans un substrat de la plaque ou du cylindre une première structure de diffraction qui, après application par la plaque ou le cylindre sur une surface, produit une (ou des) première(s) image ou images de diffraction en réponse à un rayonnement incident ; et l'étape consistant à former dans le substrat de la plaque ou du cylindre une seconde structure à relief de surface, ayant une résolution plus grossière par rapport à la première structure de diffraction, la seconde structure, quand elle est appliquée par la plaque ou le cylindre sur une surface, produisant une seconde image de non-diffraction visible en réponse à un rayonnement incident, **caractérisé en ce que** les première et seconde images se complètent l'une l'autre et sont situées l'une par rapport à l'autre de manière à définir une représentation composite.

36. Procédé selon la revendication 35, le procédé comprenant l'étape consistant à former un élément thermoplastique précurseur à partir duquel la plaque ou le cylindre d'impression sera formé(e), la seconde structure à relief de surface étant formée dans l'élément thermoplastique précurseur au moyen d'un procédé d'attaque directe ou de photopolymère.

37. Procédé selon la revendication 36, comportant par ailleurs l'étape consistant à former une pluralité d'éléments thermoplastiques précurseurs, l'étape consistant à faire un marquage en relief de la première structure de diffraction dans chacun de la pluralité d'éléments thermoplastiques précurseurs, l'étape consistant à joindre les éléments thermoplastiques précurseurs ensemble, et l'étape consistant à former la plaque ou le cylindre d'impression à partir des éléments thermoplastiques joints.

38. Procédé selon la revendication 36, comportant l'étape consistant à faire un marquage en relief de l'élément thermoplastique avec la première microstructure de diffraction, l'étape consistant à former une pluralité d'éléments thermoplastiques subsidiaires marqués en relief à partir du même précurseur, l'étape consistant à joindre les éléments thermoplastiques subsidiaires ensemble, et l'étape consistant à former la plaque ou le cylindre d'impression à partir des éléments thermoplastiques joints.

39. Procédé selon l'une quelconque des revendications 35 à 38, dans lequel l'élément thermoplastique précurseur porte aussi une structure définissant des régions à impression en creux.

40. Plaque ou cylindre d'impression selon l'une quelconque des revendications 23 à 34 ou formée (formé) par un procédé selon l'une quelconque des revendications 35 à 39, dans laquelle/lequel la plaque ou le cylindre d'impression définit un ou plusieurs billets de banque.

41. Procédé de fabrication d'un document de valeur selon l'une quelconque des revendications 1 à 22, le procédé comportant (i) l'étape consistant à mettre en oeuvre un substrat portant une feuille métallique ou une encre ; (ii) l'étape consistant à faire un marquage en relief de la première structure de diffraction dans la feuille métallique ou l'encre ; et (iii) l'étape consistant à mettre en oeuvre la seconde structure à relief de surface et/ou imprimée adjacente à la première structure.

42. Procédé selon la revendication 41, dans lequel les étapes (ii) et (iii) sont effectuées de manière simultanée.

43. Procédé selon la revendication 42, dans lequel les étapes (ii) et (iii) sont effectuées en utilisant la même plaque ou cylindre en creux.

44. Procédé selon l'une quelconque des revendications 41 à 43, dans lequel la seconde structure est marquée en relief à froid dans le substrat.

45. Procédé selon l'une quelconque des revendications 41 à 43, dans lequel la seconde structure est imprimée en creux sur le substrat.

46. Document de valeur selon l'une quelconque des revendications 1 à 22 ou réalisé selon l'une quelconque des revendications 41 à 45 comportant l'un parmi un billet de banque, un bon d'achat, un timbre ou certificat, une étiquette, un passeport, une carte d'identité, une carte de transaction financière, ou un permis de conduire.
